# EUROPEAN PATENT SPECIFICATION

(11) **EP 1 903 263 B1**
(45) Date of publication and mention of the grant of the patent: **25.03.2009**
(21) Application number: 07111796.4
(22) Date of filing: 05.07.2007
(51) Int. Cl.: F16H 61/16

(54) **Shift control device of motorcycle**
Schaltungskontrollvorrichtung für ein Motorrad
Dispositif de commande de vitesse d'une motocyclette

(30) Priority: 21.09.2006 JP 2006256006
(43) Date of publication of application: 26.03.2008
(73) Proprietor: Honda Motor Co., Ltd., Tokyo 107-8556 (JP)
(72) Inventor: Suzuki, Osamu, Saitama 351-0193 (JP); Hatanaka, Kaoru, Saitama 351-0193 (JP); Miyagishi, Syunichi, Saitama 351-0193 (JP)
(74) Representative: Rupp, Christian

(56) References cited:
- WO-A-01/44020
- DE-A1- 10 350 047
- US-A- 5 598 335
- US-A1- 2004 098 183

## Description

The present invention relates to an improvement of a shift control device of a motorcycle.

As a conventional shift control device of a motorcycle, there has been known a shift control device which inhibits shifting of a transmission by detecting a steering angle and a vehicle speed of a vehicle (for example, see patent document 1).
JP-A-2004-116752(corresponding to US 2004/098183)

Fig. 1 and Fig. 5 of the patent document 1 are explained hereinafter. A hydrostatic continuously variable transmission 5 integrally mounts a fixed capacitance hydraulic pump 6 and a variable capacitance hydraulic motor 7 on a drive shaft 8, and a hydraulic closed circuit is connected between the fixed capacitance hydraulic pump 6 and a variable capacitance hydraulic motor 7.

When a driven gear 4 which is meshed with a drive gear 3 mounted on a crankshaft 2 of an internal combustion engine 1 is rotated, the fixed capacitance hydraulic pump 6 is also rotated. This rotational force is outputted to the drive shaft 8. Here, in response to a change of an inclination angle of a movable oblique plate (not shown in the drawing) incorporated in the variable capacitance hydraulic motor 7 by an inclination angle control mechanism 10, a shift ratio of the hydrostatic continuously variable transmission 5 is changed.
To be more specific, the above-mentioned inclination angle control of the movable oblique plate is performed by controlling driving of a control motor 11 using an ECU 30.

A vehicle speed signal from a vehicle speed sensor 33 and a steering angle signal from a steering angle sensor 38 mounted on a bar handle are inputted to the ECU 30, and the ECU 30 allows the inclination angle control mechanism 10 to change the inclination angle of the movable oblique plate in response to these signals.

When the inputted vehicle speed and steering angle are calculated and a calculation result satisfies predetermined conditions, shifting (shift down) by the hydrostatic continuously variable transmission 5 is inhibited. However, for example, when the rolling behavior during slalom traveling of a vehicle or the like is fast, there may be a case that it is desirable to inhibit the shifting even when the calculation result of the vehicle speed and the steering angle does not satisfy the predetermined conditions.

Accordingly, it is an object of the present invention to provide an improvement of a shift control device of a motorcycle which can restrict shifting when the rolling behavior of a vehicle body during slalom traveling or the like is fast and a bar handle is quickly turned.

The invention according to claim 1 is directed to a shift control device of a motorcycle which controls shifting of an automatic transmission mounted on the motorcycle, wherein the shift control device includes a rolling angular velocity detection means which detects a rolling angular velocity of a vehicle body and a steering-angle angular velocity detection means which detects a steering-angle angular velocity of a bar handle, and the shift control device inhibits the shifting when detection signals from the rolling angular velocity detection means and the steering-angle angular velocity detection means respectively exceed reference values.

To explain the manner of operation, when the rolling angular velocity exceeds the reference value and the steering-angle angular velocity exceeds the reference value, the shift control device inhibits the shifting.
When the rolling of the vehicle body is fast so that the rolling angular velocity exceeds the reference value and the bar handle is quickly turned so that the steering-angle angular velocity exceeds the reference value, by inhibiting the shifting, a change of a driving force of wheels during vehicle body rolling or steering can be eliminated thus realizing smoother and more comfortable turning of the vehicle.

The invention according to claim 2 is directed to a shift control device of a motorcycle in which the rolling angular velocity detection means is arranged at a rear portion of the vehicle body and above a rear wheel.
To explain the manner of operation, since the rolling angular velocity detection means is arranged at a position remote from an engine, the rolling angular velocity detection means is hardly influenced by vibrations of the engine.

According to the invention described in claim 1, the shift control device includes a rolling angular velocity detection means which detects a rolling angular velocity of a vehicle body and a steering-angle angular velocity detection means which detects a steering-angle angular velocity of a bar handle, and the shift control device inhibits the shifting when detection signals from the rolling angular velocity detection means and the steering-angle angular velocity detection means respectively exceed reference values and hence, a change of a driving force of wheels during vehicle body rolling or steering can be eliminated thus realizing smoother and more comfortable turning of the vehicle.

According to the invention described in claim 2, the rolling angular velocity detection means is arranged at a rear portion of the vehicle body and above a rear wheel and hence, the rolling angular velocity detection means is arranged at a position remote from an engine, the rolling angular velocity detection means is hardly influenced by vibrations of the engine whereby it is possible to detect the rolling angular velocity of the vehicle body with high accuracy.
Fig. 1A side view of a motorcycle which includes a shift control device according to the present invention.
Fig. 2A block diagram showing the shift control device according to the present invention.
Fig. 3A flowchart of a shift control performed by the shift control device according to the present invention.

Hereinafter, a best mode for carrying out the present invention is explained in conjunction with attached drawings. Here, the drawings are viewed in the same direction as numerals.

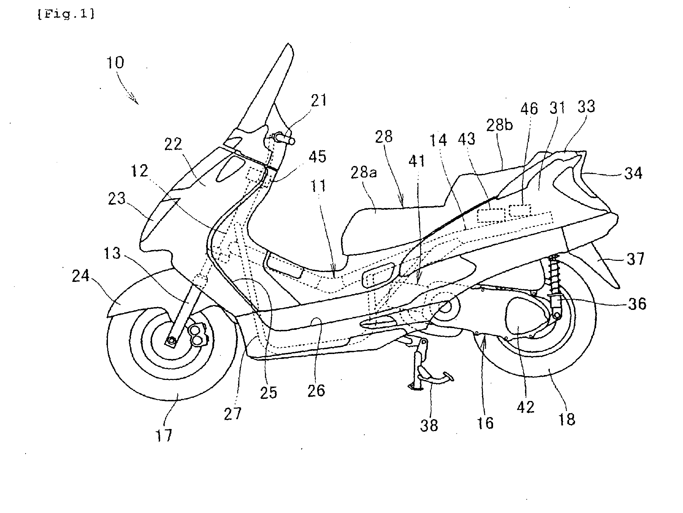

Fig. 1 is a side view of a motorcycle which includes a shift control device according to the present invention. A motorcycle 10 is a scooter-type vehicle in which a front fork 13 is steerablly mounted on a head pipe 12 which constitutes a front end of a vehicle body frame 11, a power unit 16 is mounted on a main upper frame 14 (constituting the vehicle body frame 11) which extends rearwardly from the head pipe 12 in a vertically swingable manner, a front wheel 17 is mounted on a lower end of the front fork 13, and a rear wheel 18 is mounted on a rear end of the power unit 16.

Here, numeral 21 indicates a bar handle which is joined to the front fork 13, numeral 22 indicates a front cover, numeral 23 indicates a head lamp, numeral 24 indicates a front fender, numeral 25 indicates a leg shield, numeral 26 indicates a floor step, numeral 27 indicates a lower frame which constitutes the vehicle body frame 11, numeral 28 indicates a tandem seat (numeral 28a indicating a rider seat, numeral 28b indicating a pillion seat), numeral 31 indicates a side cover, numeral 33 indicates a grab rail, numeral 34 indicates a rear combination lamp, numeral 36 indicates a rear cushion unit, numeral 37 indicates a rear fender, and numeral 38 indicates a main stand.

The power unit 16 is constituted of an engine 41 which forms a front portion of the power unit 16 and a continuously variable transmission 42 which is integrally joined to the engine 41 and extends rearwardly, and a control unit 43 which controls the engine 41 and the continuously variable transmission 42 is mounted on a rear portion of the main upper frame 14.

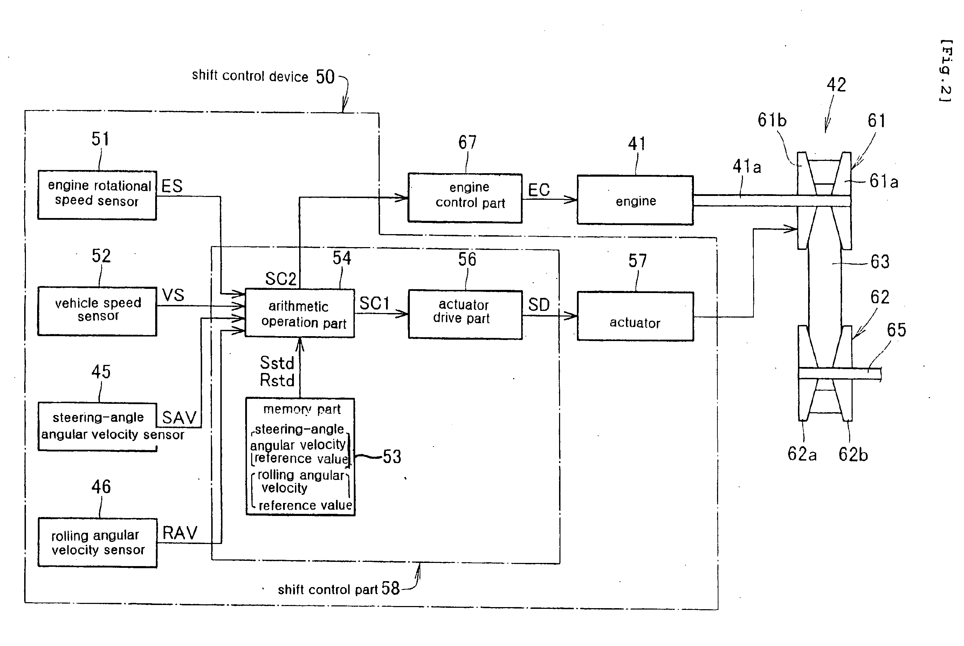

The control unit 43 includes an engine control part which controls the engine 41 and a shift control part which controls shifting using the continuously variable transmission 42. The motorcycle 10 includes a shift control device having the shift control part. The engine control part, the shift control part and the shift control device are explained in conjunction with Fig. 2.

Numeral 45 indicates a steering-angle angular velocity sensor which detects an angular velocity of a steering angle of the bar handle 21, and the steering-angle angular velocity sensor 45 is mounted on an upper portion of the head pipe 12.
Numeral 46 indicates a rolling angular velocity sensor which detects an angular velocity of rolling of the vehicle body, and the rolling angular velocity sensor 46 is arranged on a rear portion of the vehicle body, that is, is arranged above the rear wheel 18 and, at the same time, is mounted on a rear portion of the main upper frame 14.

Fig. 2 is a block diagram showing the shift control device 50 according to the present invention. The shift control device 50 is constituted of: an engine-rotational-speed sensor 51 which detects a rotational speed of the engine; a vehicle speed sensor 52 which detects a vehicle speed of the motorcycle; the steering-angle angular velocity sensor 45; the rolling angular velocity sensor 46; a memory part 53 which stores a steering-angle angular velocity reference value Sstd and a rolling angular velocity reference value Rstd; an arithmetic operation part 54 which receive inputting of an engine-rotational-speed signal ES, a vehicle speed signal VS, a steering-angle angular velocity signal SAV and a rolling angular velocity signal RAV which are respectively outputted from the engine-rotational-speed sensor 51, the vehicle speed sensor 52, the steering-angle angular velocity sensor 45 and the rolling angular velocity sensor 46 and also performs an arithmetic operation by comparing the steering-angle angular velocity signal SAV and the steering-angle angular velocity reference value Sstd as well as the rolling angular velocity signal RAV and the rolling angular velocity reference value Rstd; an actuator drive part 56 which receives inputting of an arithmetic operation signal SC1 as an arithmetic operation result by the arithmetic operation part 54; and an actuator 57 which performs shifting using the continuously variable transmission 42 in response to a drive signal SD from the actuator drive part 56.
The above-mentioned memory part 53, the arithmetic operation part 54 and the actuator drive part 56 constitute a shift control part 58.

The continuously variable transmission 42 is constituted of a drive pulley 61 which is joined to a crankshaft 41a provided to the engine 41, a driven pulley 62 which is joined to a rear wheel 18 side (see Fig. 1) and a belt 63 which respectively spans around the drive pulley 61 and the driven pulley 62.

The drive pulley 61 is constituted of a fixed pulley half body 61a which is integrally mounted on the crankshaft 41a and a movable pulley half body 61b which is movably mounted on the crankshaft 41a such that the movable pulley half body 61b approaches or is moved away from the fixed pulley half body 61a. The movable pulley half body 61b is driven by the actuator 57.

The driven pulley 62 is constituted of a fixed pulley half body 62a which is integrally mounted on an output shaft 65 and a movable pulley half body 62b which is movably mounted on the output shaft 65 such that the movable pulley half body 62b approaches or is moved away from the fixed pulley half body 62a. The output shaft 65 is joined to an axle of the rear wheel 18 by way of a plurality of gears.
The movable pulley half body 62b is pushed to the fixed pulley half body 62a by a spring not shown in the drawing by way of a belt 63.

When the movable pulley half body 61b of the drive pulley 61 approaches the fixed pulley half body 61a using the above-mentioned actuator 57, a groove width of the drive pulley 61 is decreased and a wrapping radius of the belt 63 which is wrapped around the drive pulley 61 is increased. Along with the increase of the wrapping radius of the belt 63, the movable pulley half body 62b of the driven pulley 62 is moved away from the fixed pulley half body 62a against a resilient force of the spring, and the wrapping radius of the belt 63 which is wrapped around the driven pulley 62 is decreased. Accordingly, a gear ratio (the wrapping radius of the belt on a driven-pulley-62 side /the wrapping radius of the belt on a drive-pulley-61 side) is decreased.

On the other hand, when the movable pulley half body 61b of the drive pulley 61 is moved away from the fixed pulley half body 61a using the above-mentioned actuator 57, the groove width of the drive pulley 61 is increased and the wrapping radius of the belt 63 on the drive-pulley-61 side is decreased. Along with the decrease of the wrapping radius of the belt 63 on the drive-pulley-61 side, the movable pulley half body 62b of the driven pulley 62 approaches the fixed pulley half body 62a due to the resilient force of the spring, and the wrapping radius of the belt 63 on the driven-pulley-62 side is increased. Accordingly, the gear ratio is increased.

The arithmetic operation part 54 sends a arithmetic operation signal SC2 which is a calculation result to the engine control part 67, and the engine control part 67 controls the engine 41 (for example, controls an engine rotational speed) based on the arithmetic operation signal SC2.
The above-mentioned shift control part 58 and the engine control part 67 are portions included in the above-mentioned control unit 43.

For example, when the motorcycle starts slalom traveling, the arithmetic operation part 54 confirms whether the engine rotational speed and the vehicle speed assume zero or not (that is, whether the vehicle is stopped or not). When it is confirmed that the vehicle is not stopped, a steering-angle angular velocity of the vehicle in such a state is compared with the steering-angle angular velocity reference value Sstd stored in the memory part 53 and, at the same time, the rolling angular velocity is compared with the rolling angular velocity reference value Rstd stored in the memory part 53. When the detected steering-angle angular velocity is equal to or more than the steering-angle angular velocity reference value Sstd and the detected rolling angular velocity is equal to or more than the rolling angular velocity reference value Rstd, the arithmetic operation part 54 sends the arithmetic operation signal SC1 to the actuator drive part 56. Further, the actuator drive part 56 sends the drive signal SD to the actuator 57 thus maintaining the position of the movable pulley half body 61b of the drive pulley 61.

Due to such a constitution, the groove width of the drive pulley 61 is not changed and hence, the shifting of the continuously variable transmission 42 is not performed so that the gear ratio is fixed. For example, even when the throttle opening of the intake device is changed in such a state, only the engine rotational speed is changed and the gear ratio is not changed and hence, only the vehicle speed is changed.

For example, the shifting of the continuously variable transmission 42 is performed during slalom traveling, a driving force of the rear wheel 18 is changed and hence, there exists a possibility that the smooth and comfortable turning operation of the vehicle is obstructed.

According to the present invention, as described above, when the rolling behavior of a vehicle body is fast and the steering of the bar handle is quick during slalom traveling of the motorcycle or the like, by performing a control to inhibit the shifting of the continuously variable transmission 42, the change of the driving force of the rear wheel attributed to the shifting can be eliminated thus realizing smoother and more-comfortable traveling of the vehicle.

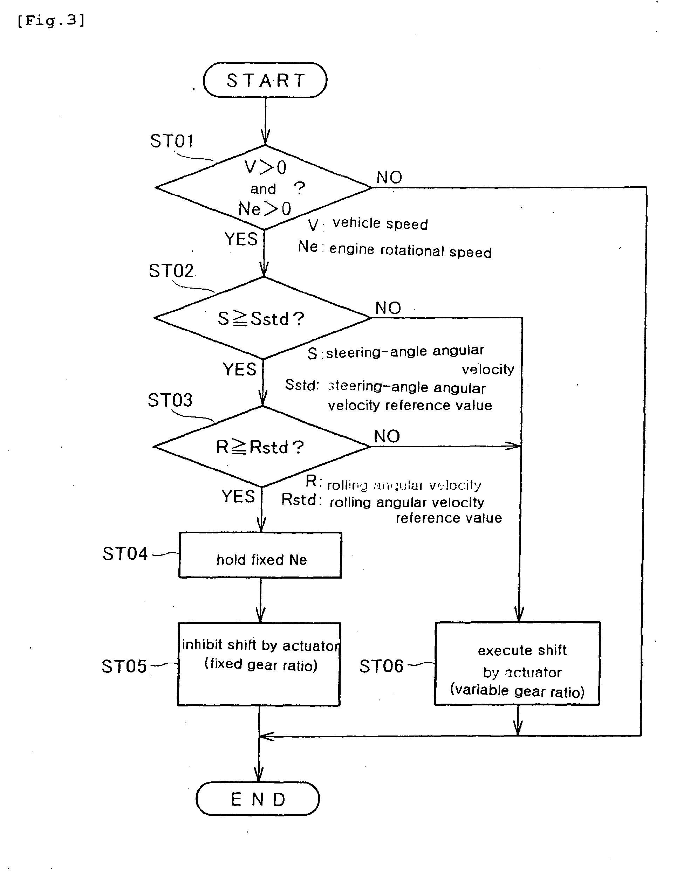

Fig. 3 is a flowchart of a shift control performed by the shift control device according to the present invention. In the drawing, symbol STXX indicates a step number.
In step ST01, it is determined whether the vehicle speed assumes a positive value (V>0) or not and the engine rotational speed assumes a positive value (Ne>0) or not.
If the vehicle speed is V>0 and the engine rotational speed is Ne>0 (YES), processing advances to step ST02.
If the vehicle speed is not V>0 and the engine rotational speed is not Ne>0 (NO), that is, if the vehicle speed is V=0 and the engine rotational speed is Ne=0 (the motorcycle being in a stopped state), processing is finished.

In step ST02, it is determined whether the steering-angle angular velocity S is equal to or more than the steering-angle angular velocity reference value Sstd (S≥Sstd) or not.
If the steering-angle angular velocity S is S≥Sstd (YES), processing advances to step ST03.
If the steering-angle angular velocity S is not S>Sstd (NO), that is, if the steering-angle angular velocity S is S<Sstd, processing advances to step ST06.

In step ST03, it is determined whether the rolling angular velocity R is equal to or more than the rolling angular velocity reference value Rstd (R>Rstd) or not.
If the rolling angular velocity R is R≥Rstd (YES), processing advances to step ST04.
If the rolling angular velocity R is not R≥Rstd (NO), that is, the rolling angular velocity R is R<Rstd, processing advances to step ST06.

In step ST04, the engine rotational speed Ne is held in a fixed value.
In step ST05, by inhibiting the shifting using the actuator, the gear ratio is fixed.
In step ST06, by executing the shifting using the actuator, the gear ratio is changed.
With the above-mentioned steps, the shift control by the shift control device is completed.
As described above, by inhibiting the shifting and holding the engine rotational speed Ne at the fixed value, it is possible to further reduce a driving manipulation load imposed on a rider.

As has been explained heretofore in conjunction with Fig. 1 and Fig. 2, the present invention is firstly characterized in that, in the shift control device 50 which controls the shifting of the continuously variable transmission 42 which is mounted on the motorcycle 10 as the automatic transmission, the shift control device 50 includes the rolling angular velocity sensor 46 which detects the rolling angular velocity R of the vehicle body as the rolling angular velocity detection means and the steering-angle angular velocity sensor 45 which detects the steering-angle angular velocity S of the bar handle 21 as the steering-angle angular velocity detection means, and the shift control device 50 inhibits the shifting when detection signals from the rolling angular velocity sensor 46 and the steering-angle angular velocity sensor 45 respectively exceed the rolling angular velocity reference value Rstd and the steering-angle angular velocity reference value Sstd.

In this manner, the change of the driving force of wheel during vehicle body rolling or steering can be eliminated thus realizing the smoother and more-comfortable traveling of the vehicle.

The present invention is secondly characterized in that the rolling angular velocity sensor 46 is arranged on the rear portion of the vehicle body and above the rear wheel 18.
Due to such a constitution, the rolling angular velocity sensor 46 is arranged at the position remote from the engine 41 and hence, the rolling angular velocity sensor 46 is hardly influenced by vibrations of the engine 41 whereby it is possible to detect the rolling angular velocity of the vehicle body with high accuracy.

Here, in this embodiment, as shown in Fig. 2, the engine control part 67 is configured such that the engine control part 67 sets the throttle opening of the intake device to the fixed value for example, and sets the rotational speed of the engine 41 to the fixed value based on the arithmetic operation signal SC2 from the arithmetic operation part 54. However, the present invention is not limited to the above-mentioned embodiment. For example, as in the case in which the throttle valve is quickly opened, when an opening change ratio of the throttle opening exceeds a predetermined value, a control for suppressing the behavior of the vehicle by decreasing an increase rate of the engine rotational speed to a fixed rate may be performed.

The shift control device of the present invention is applicable to a motorcycle.
10: motorcycle
18: rear wheel
21: bar handle
42: automatic transmission (continuously variable transmission)
45: steering-angle angular velocity detection means (steering-angle angular velocity sensor)
46: rolling angular velocity detection means (rolling angular velocity sensor)
50: shift control device
R: rolling angular velocity
Rstd: reference value (rolling angular velocity reference value)
S: steering-angle angular velocity
Sstd: reference value (steering-angle angular velocity reference value)

## Claims

1. A shift control device (50) of a motorcycle (10) which controls shifting of an automatic transmission (42) mounted on the motorcycle (10), wherein
the shift control device (50) includes a rolling angular velocity (R) detection means (46) which detects a rolling angular velocity (R) of a vehicle body and a steering-angle angular velocity detection means (45) which detects a steering-angle angular velocity (S) of a bar handle (21), and the shift control device (50) inhibits the shifting when detection signals from the rolling angular velocity detection means (46) and the steering-angle angular velocity detection means (45) respectively exceed reference values.

2. A shift control device (50) of a motorcycle (10) according to claim 1, wherein the rolling angular velocity detection means (46) is arranged at a rear portion of the vehicle body and above a rear wheel (18).

## Patentansprüche

1. Schaltsteuervorrichtung (50) eines Motorrads (10), die das Schalten eines Automatikgetriebes (42) steuert, das in dem Motorrad (10) eingebaut ist, worin
die Schaltsteuervornchtung (50) ein Rollwinkelgeschwindigkeits-Detektionsmittel (46), das eine Rollwinkelgeschwindigkeit (R) eines Fahrzeugkörpers, und ein Lenkeinschlagwinkelgeschwindigkeits-Detektionsmittel (45) beinhaltet, das eine Lenkeinschlagwinkelgeschwindigkeit (S) einer Lenkstange (21) detektiert und die Schaltsteuervorrichtung (50) das Schalten unterbindet, wenn die Detektionssignale von dem Rollwinkelgeschwindigkeits-Detektionsmittel (46) und dem Lenkeinschlagwinkelgeschwindigkeits-Detektionsmittel (45) jeweils Referenzwerte überschreiten.

2. Schaltsteuervorrichtung (50) eines Motorrads (10) nach Anspruch 1, worin das Rollwinkelgeschwindigkeits-Detektionsmittel (46) an einem hinteren Teil des Fahrzeugkörpers und oberhalb eines Hinterrads (18) angeordnet ist.

## Revendications

1. Dispositif de commande de vitesse (50) d'un motocycle (10) qui commande le changement d'une boîte de vitesses automatique (42) montée sur le motocycle (10), dans lequel
le dispositif de commande de vitesse (50) comprend des moyens de détection d'une vitesse angulaire de roulement (R) (46) qui détectent une vitesse angulaire de roulement (R) d'un corps de véhicule et des moyens de détection d'une vitesse angulaire d'un angle de direction (45) qui détectent une vitesse angulaire d'un angle de direction (S) d'un guidon (21), et le dispositif de commande de vitesse (50) empêche le changement de vitesse lorsque des signaux de détection provenant des moyens de détection de la vitesse angulaire de roulement (46) et les moyens de détection de la vitesse angulaire de l'angle de direction (45) dépassent respectivement des valeurs de référence.

2. Dispositif de commande de vitesse (50) d'un motocycle (10) selon la revendication 1, dans lequel les moyens de détection de la vitesse angulaire de roulement (46) sont agencés sur une portion arrière du corps de véhicule et au-dessus d'une roue arrière (18).
